# EUROPÄISCHE PATENTANMELDUNG

(11) **EP 2 388 305 A2**
(43) Veröffentlichungstag der Anmeldung: **23.11.2011**
(21) Anmeldenummer: 11004020.1
(22) Anmeldetag: 16.05.2011
(51) Int. Cl.: C10L 5/44

(54) **Thermische Verwertung fester Brennstoffe**

(30) Priorität: 17.05.2010 DE 102010020712; 01.03.2011 DE 102011012756
(71) Anmelder: TerraNova Energy GmbH, 40231 Düsseldorf (DE)
(72) Erfinder: Buttman, Marc, 40231 Düsseldorf (DE); Schneider, Claudia, 66629 Oberkirchen (DE); Drame, Christian, 45470 Mühlheim a.d. Ruhr (DE); Fillbach, Jürgen, 40547 Düsseldorf (DE)
(74) Vertreter: Cohausz Hannig Borkowski Wißgott

(57) **Zusammenfassung**

Die Erfindung betrifft eine Vorrichtung und ein Verfahren zur energieeffizienten hydrothermalen Karbonisierung von Biomasse zu einer Kohle, der anschließenden thermischen Verwertung dieser Kohle und die Behandlung des entstehenden Abgases und Abwassers.

## Beschreibung

Die Erfindung betrifft eine Vorrichtung und ein Verfahren zur energieeffizienten hydrothermalen Karbonisierung von Biomasse zu einer Kohle, der anschließenden thermischen Verwertung dieser Kohle und die Behandlung des entstehenden Abgases und Abwassers.

### Stand der Technik:

Der Stand der Technik wird bspw. durch DE 102007062808, DE 102007062809, DE 102007062810, DE 102007062811, DE 102007056170, DE 102008058444 beschrieben. In diesen Schriften wird die thermische Verwertung von durch hydrothermale Karbonisierung hergestellten Kohlen zur Wärme- und Stromgewinnung mit üblichen Verfahren erwähnt. (2a)

Bei der Hydrothermalen Karbonisierung (HTC) wird Biomasse unter Luftabschluss bei Temperaturen um die 200°C innerhalb weniger Stunden in einen Kohleschlamm umgewandelt. Der Stand der Technik wird bspw. durch DE 102007062808, DE 102007062809, DE 102007062810, DE 102007062811, DE 102007056170, DE 102008058444 beschrieben. In diesen Schriften wird die Hydrothermale Karbonisierung verschiedener Arten von Biomasse unter unterschiedlichen Reaktionsbedingungen und in verschiedenen Verfahren erläutert. (3a)

In DE 102008056006A1 wird eine direkte Verwendung der Abgase eines Blockheizkraftwerks zur Erhitzung eines Reaktors beschrieben. (4a)

Das bei der Hydrothermalen Karbonisierung entstehende Reaktionswasser verfügt über einen hohen CSB Wert bis zu 50.000 mg/l, z.T. aufgrund von Huminstoffen, die sich während Zerfallsreaktionen von Biomasse bilden. Diese können, in der Reihenfolge des molekularen Aufbaus, in Form von säure- und basenlöslicher Fulvosäure, wasserlöslichen Huminsäuren oder unlöslichen Huminen auftreten. An diese molekularen Strukturen lagern sehr gut insb. Schwermetalle an, sodass Grenzwerte für die Einleitung des Abwassers in das Abwassersystem überschritten werden.

Als derzeitige Lösung wird dieses Abwasser einem aeroben oder anaeroben Abbauprozess zugeführt, um den CSB Wert und damit die enthaltenden organischen Verbindungen zu reduzieren und die Schwermetalle für klassische Fällprozesse erreichbar zu machen. In einem nachfolgenden Behandlungsschritt werden der pH Wert des Abwassers eingestellt und geeignete Fällmittel zugegeben, um die Schwermetalle auszufällen. (5a)

### Nachteile des Standes der Technik:

Bei den durch hydrothermale Karbonisierung hergestellten Brennstoffen handelt es sich um einen staubartigen Festbrennstoff, der einer gemahlenen Braunkohle sehr ähnlich ist. Er verfügt über sehr kleine Partikel im Bereich bis zu wenigen Mikrometern. Dieser Brennstoff führt in üblichen Verbrennungsprozessen zu einigen Problemen.

So kann in einer Rostfeuerung nicht ohne zusätzliche Maßnahmen sichergestellt werden, dass der Kohlestaub durch die Rostöffnungen in den Aschebereich des Ofens fällt, ohne vollständig verbrannt zu sein.

In Staubfeuerungen kann der Brennstoff bei hohen Brenngasgeschwindigkeiten noch teilweise unverbrannt aus dem Brennbereich ausgetragen werden.

Bestehen bspw. aufgrund des Abfallcharakters der Kohle oder wegen vorhandenen Schadstoffen in der Zusammensetzung der Kohle Mindestanforderungen an die Verbrennungsbedingungen, wie bspw. die sichere Einhaltung einer Mindesttemperatur oder einer Mindestaufenthaltsdauer, können diese nicht sicher nachgewiesen werden.

Dadurch ergeben sich Einschränkungen in der Auswahl der zur hydrothermalen Karbonisierung geeigneten Stoffe. Insbesondere sind nur höherwertige Biomassen, wie bspw. Grünschnitt oder nachwachsende Rohstoffe, zur uneingeschränkten thermischen Verwertung geeignet. (2b)

Um die Hydrothermale Karbonisierung von Biomasse wirtschaftlich und energieeffizient unter den notwendigen Reaktionsbedingungen von über 140°C betreiben zu können, muss die Erwärmung der Biomasse kontinuierlich in Wärmetauschern erfolgen, in denen die Abwärme des entnommenen Reaktionsprodukts genutzt wird. Die Biomasse hat dabei aufgrund des hohen Feststoffgehalts häufig eine schlechte Wärmefähigkeit, die damit lange Aufenthaltsdauern im Wärmetauscher und folglich lange Wärmetauscherstrecken erfordert. Da Biomasse mit hohem Feststoffgehalt zudem meist noch über eine hohe Viskosität verfügt, ist mit längeren Rohrstrecken im Wärmetauscher zudem auch eine höhere Pumpleistung notwendig. Werden die Wärmetauscher dagegen zu kurz ausgelegt, erhöhen sich die Betriebskosten durch den Eintrag zusätzlich notwendiger, thermischer Energie. (3b)

Trotz der grundsätzlich exothermen Eigenschaft des Verfahrens der Hydrothermalen Karbonisierung ist zur Aufrechterhaltung des Prozesses eine Zufuhr von Wärmeenergie notwendig, die durch die Abwärme der Anlagentechnik und des austretenden Produkts verloren geht. Zur Trocknung des Kohleschlamms ist zusätzlich Wärmeenergie notwendig, die die Gesamtenergiebilanz des Verfahrens verschlechtert. Die durch die exotherme Reaktion freigesetzte Wärme erweist sich dafür als nicht ausreichend. Eine Zufeuerung verschlechtert die Wirtschaftlichkeit und die CO2 Bilanz des Verfahrens.

Bei direkter Verwendung der Abgase eines Blockheizkraftwerks zur Erhitzung eines Reaktors entsteht eine ungleichmäßige Erwärmung der Reaktorwand, die zu lokalen Schäden führen kann. Ebenso wirken die Abgase korrosiv und schädigen das Material des Reaktors. Inhaltsstoffe der Abgase, wie Teer, Ruß oder ölige Anteile, setzen sich auf der Reaktoroberfläche ab und verschlechtern den Wärmeübergang. Durch die notwenige Wärmeisolierung des Reaktors sind solche Verschmutzungen nur sehr schwer zugänglich und schwer zu reinigen.

Der Stand der Technik beschreibt weiterhin Behälter, aus denen unter Druck karbonisierter Kohleschlamm entnommen bzw. ausgeschleust wird. Die Austragseinrichtungen können dabei wechselnd befüllte und entleerte Behälter oder Pumpen wie bspw. Extenderschneckenpumpen sein. Der damit verbundene aparative Aufwand ist hoch, da diese Einrichtungen über eine hohe Temperatur- und Druckbeständigkeit verfügen müssen. Außerdem ist der karbonisierte Kohleschlamm unter 100°C abzukühlen, bevor er entspannt wird, um einen sicheren Weitertransport unter Umgebungsbedingungen zu ermöglichen. Die Abkühlung geschieht dabei vorrangig über Wärmetauscher, die in Temperaturbereichen um 100°C aufgrund geringer Differenztemperaturen eine geringe Effizienz aufweisen, was zu hohen Anlagenkosten im Vergleich zu der erzielten Erwärmungswirkung führt. (4b)

Für die oben beschriebene Art der Abwasserbehandlung ist ein mehrstufiges Verfahren notwendig, das die Anlagenkomplexität sowie die Investitionskosten erhöht. Weiterhin erfordert der Abbauprozess der organischen Verbindungen lange Behandlungszeiten und damit große Reaktionsvolumina. Im Fällprozess wirkt sich der Chemikalienverbrauch negativ auf die Betriebskosten aus. (5b)

### Aufgabe der Erfindung:

Die Aufgabe der Erfindung ist es, ein Verfahren zur thermischen Verwertung aufzuzeigen, mit dem es möglich ist, die Umgebungsbedingungen bei der Verbrennung der durch hydrothermale Karbonisierung hergestellten Kohle oder der Behandlung der Brenngase definiert festzulegen und deren Einhaltung nachzuweisen.

Dadurch wird die Verwendung von niederwertiger Biomasse oder mit Schadstoffen belasteter Biomasse ermöglicht. (2c)

Die Aufgabe der Erfindung ist es, ein Additiv zu finden, das die Wärmeleitfähigkeit der Biomasse als Gemisch erhöht, um damit den Wärmetausch effektiver und wirtschaftlicher zu gestalten. Das Additiv soll außerdem die Viskosität der Biomasse erniedrigen um die Pumpfähigkeit zu verbessern. Nach Möglichkeit soll dieses Additiv zusätzliche Eigenschaften aufweisen, die nach Beimischung die Hydrothermale Karbonisierung der Biomasse unterstützen und Vorteile für die Weiterbehandlung des Reaktionsprodukts aufweisen. (3c)

Die Aufgabe der Erfindung ist es, einen Verfahren zu finden, in dem die Zuführung von Wärmeenergie in den notwendigen Temperaturbereichen von bis zu 300°C unter solchen Bedingungen erfolgt, die eine bestmögliche Energiebilanz und CO2 Bilanz des Verfahrens ermöglicht.

Dabei soll auf einen gleichmäßigen und materialschonenden Wärmeeintrag geachtet werden.

Weiterhin soll die Trocknung des Kohleschlamms unter Ausnutzung der Austrittstemperatur aus dem Reaktionsvolumen erfolgen, um möglichst wenig externe Wärmezufuhr zu benötigen.

Weiterhin soll die Ausschleusung des Kohleschlamms aus dem HTC Reaktor mit einem geringen aparativen Aufwand erfolgen. Es soll außerdem der Druck und die Temperatur des Kohleschlamms der nachfolgenden Trocknung direkt nutzbar gemacht werden. (4c)

Die Aufgabe der Erfindung ist es, ein Verfahren zu finden, das in einem einfachen Behandlungsschritt mit geringen Betriebskosten die organischen Strukturen des HTC Abwassers aufbricht, die Schwermetalle für eine Fällungsreaktion verfügbar macht und gleichzeitig ausfällt. Weiterhin soll das Verfahren geeignet sein, Nährstoffe wie bspw. Phosphor über das Fällprodukt pflanzenverfügbar rückzugewinnen. Weiterhin soll eine Regelgröße gefunden werden, mit der man den Reaktionsablauf und den Abscheidegrad der Inhaltsstoffe steuern kann. Weiterhin soll eine Vorrichtung definiert werden, in der das Verfahren kontinuierlich ablaufen kann.

Durch das erfindungsgemäße Verfahren soll es auch ermöglicht werden, das HTC Abwasser zur Behandlung von Abgasen aus der thermischen Verwertung von HTC Kohle gezielt mit Schadstoffen anzureichern und diese anschließend abzuscheiden. (5c)

### Lösungen:

Diese Aufgabe wird erfindungsgemäß dadurch gelöst,
- dass die Kohle in einer Brennkammer oder in einem Wirbelschichtofen verbrannt wird
- dass die Brennkammer oder der Wirbelschichtofen durch die mechanische Auslegung und die Betriebsart eine Mindestaufenthaltsdauer der durchströmenden Kohlepartikel sicherstellt
- dass durch Messung der Verbrennungsbedingungen, wie z.B. der Temperatur im Inneren der Brennkammer oder des Wirbelschichtofens, die Mindestanforderungen an diese Bedingungen sicher nachgewiesen werden können
- dass bis zum Erreichen der notwendigen Mindestanforderungen ein alternativer Brennstoff verwendet wird und nach Erreichen der notwendigen Mindestanforderungen die durch hydrothermale Karbonisierung hergestellte Kohle verbrannt wird
- dass der Brennprozess bei Unterschreiten der Mindestanforderungen entweder angebrochen wird oder die Verbrennung auf einen alternativen Brennstoff umgestellt wird (2d)

Diese Aufgabe wird erfindungsgemäß auch dadurch gelöst,
- dass der Biomasse vor der Erwärmung Glyzerin (Propantriol), Rohglyzerin, glyzerinähnliche Stoffe aus der Biodieselproduktion oder chemisch verwandte Stoffe, im Folgenden als Additiv beschrieben, beigemischt werden
- dass das Biomasse/Additivgemisch durch einen Wärmetauscher in ein Reaktionsvolumen gepumpt wird oder durch andere Vorrichtungen zum Einschleusen in ein Druckvolumen eingebracht wird
- dass das Biomasse/Additivgemisch einer Hydrothermalen Karbonisierung unterzogen wird.

Als Additiv ist hierbei einer der folgenden Stoffe oder Gemische, die einen den folgenden Stoffe beinhalten, bezeichnet:
- Glyzerin
- Propantriol
- Triglyzeride
- Rohglyzerin
- Reststoffe aus der Biodiesel- oder Seifenherstellung
- Chemisch verwandte Stoffe der o.g. Stoffe (3d)

Diese Aufgabe wird erfindungsgemäß auch dadurch gelöst,
- dass das Verfahren der Hydrothermalen Karbonisierung mit einem Blockheizkraftwerk kombiniert wird und die über das Kühlwasser, ein Thermoöl oder Wasserdampf ausgekoppelte Wärme zur Erwärmung und Aufrechterhaltung des Prozesses verwendet wird.
- dass die Wärme des Abgasstroms des Blockheizkraftwerks in einem separaten Wärmetauscher einem Thermoöl oder Wasserdampf übergeben wird und u.a. zur Erwärmung des Reaktionsvolumens auf Temperaturen zwischen 160°C und 250°C verwendet wird
- dass die Wärme des Kühlkreislaufs des Blockheizkraftwerks zur Erwärmung des Biomasse vor dem Eintritt in das Reaktionsvolumen und zur Trocknung des Kohleschlamms verwendet wird
- dass der Kohleschlamm nach Austritt aus dem Reaktionsvolumen mit noch hoher Temperatur und/oder hohem Druck einer Sprühtrocknung zugeführt wird
- dass die Sprühtrocknung durch parallele Anordnung von Düsen oder ähnlichen Zerstäubungsvorrichtungen eine hohe Standzeit aufweist und während des Betriebs gewartet werden kann
- dass die Sprühvorrichtung durch Einstellung der wirksamen Öffnung in ihrer Charakteristik verändert werden kann

Ein Blockheizkraftwerk kann dabei ein Gasmotor, eine Turbine oder ein Flüssigbrennstoff-Motor sein, das der Produktion von elektrischer Energie dient.

Eine Sprühtrocknung ist eine Vorrichtung, die durch Zerstäuben des Ausgangsstoffs die wirksame Oberfläche erhöht und damit eine Trocknung in einem Luftstrom und/oder einer festen Oberfläche erleichtert. Dies kann durch Düsen oder Zerstäubungsvorrichtungen wie rotierende Zerstäuberscheiben erfolgen. (4d)

Diese Aufgabe wird erfindungsgemäß dadurch gelöst,
- dass das HTC Abwasser einer Elektrolyse zugeführt wird, in der Elektroden einer ausreichend hohen Gleich- oder Wechselspannung ausgesetzt sind
- dass diese Elektroden aus Werkstoffen gefertigt sind, die bezüglich der Reaktionsgeschwindigkeit, des Absinkverhaltens des Fällprodukts und der Pflanzenverfügbarkeit des ausgefällten Phosphors optimiert sind, beispielsweise die Kathoden aus Kupfer oder Graphit und die Anoden aus Eisen oder Aluminium
- dass der Abbau der Inhaltsstoffe des HTC Abwassers während der Elektrolyse über die Leitfähigkeit des HTC Abwassers gemessen wird, da die Leitfähigkeit als Summenparameter die Menge der in der Flüssigkeit gelösten Ionen angibt.
- dass das Verfahren in einer Durchflussarmatur mit einem nachfolgenden Absetzbecken integriert ist.
- dass Abgase, die in Einrichtungen zur thermischen Verwertung von HTC Kohle entstehen, durch Kontakt mit HTC Abwasser von Verunreinigungen wie bspw. Siloxane, Chlorverbindungen, Schwermetalle oder Teer befreit werden und das damit angereicherte Abwasser einer Behandlung in der beschriebenen Art zugeführt wird.

Als Elektrolyse sind dabei alle Verfahren bezeichnet, in der durch Anlegen einer elektrischen Gleich- oder Wechselspannung an Elektroden ein Stromfluss in einem flüssigen Medium in der Art erreicht wird, dass sich durch Aufspaltung von Wassermolekülen in Wasserstoff, Sauerstoff, und/oder Hydroxylionen Gase bilden.

Als Durchflussarmatur werden alle Vorrichtungen bezeichnet, in denen kontinuierlich unbehandelte Flüssigkeit einem Reaktionsvolumen zugeführt werden kann und kontinuierlich an einer anderen Stelle des Reaktionsvolumens behandelte Flüssigkeit entnommen werden kann, in der Art, dass eine Durchmischung der beiden Flüssigkeitsströme durch den inneren Aufbau weitestgehend vermieden wird.

Als Fällprodukt wird das Reaktionsprodukt bezeichnet, das ein anderes spezifisches Gewicht als das Abwasser hat und dadurch entweder absinkt oder flotiert.

Als Einrichtungen zur thermischen Verwertung von HTC Kohle werden Vergasungs- oder Pyrolyseanlagen oder Brennkammern, Wirbelschichtöfen oder vergleichbares zur Generierung von Strom oder Wärme bezeichnet.

Als Abwasser aus Hydrothermaler Karbonisierung von Biomasse wird die flüssige Phase nach einer Fest-Flüssigtrennung, beispielsweise durch Filtration, Zentrifugieren oder Absetzen, des Produkts nach einer Hydrothermalen Karbonisierung von Biomasse bezeichnet. (5d)

### Vorteile der Erfindung:

Als vorteilhaft erweist sich die Erfindung insbesondere in folgenden Punkten:
- Zur thermischen Verwertung der Kohle kann auch Biomasse der hydrothermalen Karbonisierung zugeführt werde, die eine Abfalleigenschaft hat
- Schadstoffe, die in der Kohle enthalten sind, werden durch die sichergestellten Umgebungsbedingungen sachgemäß behandelt
- Die sachgemäße Behandlung kann sicher nachgewiesen werden
- Ein Verlassen von unverbrannten Kohlepartikeln wird vermieden und damit die Verbrennung sehr effizient durchgeführt
- Durch den alternativen Betrieb mit einem konventionellen, insbesondere schadstoffarmen Brennstoff wie bspw. Braunkohlestaub, Erdgas oder Erdöl, kann sichergestellt werden, dass nur bei Vorhandensein bestimmter Umgebungsbedingungen die durch hydrothermale Karbonisierung hergestellte Kohle verbrannt wird, die ggf. Schadstoffe enthält. Bei Nichteinhaltung dieser Umgebungsbedingung kann die Zufuhr unmittelbar eingestellt werden, um ein nicht bestimmungsgemäßes Verfeuern zu vermeiden. (2e)

Durch Zugabe des Additivs wird
- die Wärmeleitfähigkeit der Biomasse bzw. des Reaktionsgemischs deutlich erhöht und die Erwärmung beschleunigt
- die Wärmekonvektion erhöht und damit die Erwärmung über Wärmetauscherflächen erleichtert
- die Viskosität des Reaktionsgemischs reduziert und damit dem Aufbau wärmeisolierender Schichten an Rohr- und Reaktorwänden vorgebeugt
- die Viskosität des Reaktionsgemischs reduziert und damit die Pumpfähigkeit erleichtert
- die Reaktivität der Hydrothermalen Karbonisierung verbessert
- der Brennwert des Produkts der Hydrothermalen Karbonisierung erhöht
- der Aschegehalt des Produkts der Hydrothermalen Karbonisierung erniedrigt
- der Wassergehalt des Reaktionsgemischs reduziert und damit eine höhere Ausbeute an Feststoff ermöglicht
- die CO2 Bilanz der Biodieselproduktion durch eine stoffliche Verwertung des Rohglyzerins verbessert
- der pH Wert der Biomasse erniedrigt und somit die Zugabe zusätzlicher Säuren zur Unterstützung der Reaktion reduziert

Die Erfindung ermöglicht damit, die Erwärmung der Biomasse deutlich effizienter durchzuführen und das Verfahren der Hydrothermalen Karbonisierung wirtschaftlicher zu betreiben. (3e)

Als vorteilhaft erweist sich die Erfindung insbesondere in folgenden Punkten:

Der verbleibende Wärmebedarf des Prozesses wird durch Abwärme zur Verfügung gestellt, die kostengünstig ortsnah verfügbar ist

Das Temperaturniveau des Abgasstroms des Blockheizkraftwerks liegt im Bereich über 400°C und eignet sich damit sehr gut zur Erwärmung eines Wärmeträgers wie Thermalöl oder Wasserdampf zur Erwärmung des Reaktors auf bis zu 250°C

Das Temperaturniveau des Kühlkreislaufs des Blockheizkraftwerks liegt im Bereich von 50°C-90°C und eignet sich damit sehr gut zur Trocknung des Kohleschlamms.

Das Blockheizkraftwerk kann die elektrische Energie für den HTC Prozess zur Verfügung stellen und damit ein ortsunabhängig aufstellbares oder mobiles System ermöglichen

Bei Verwendung nachwachsender Rohstoffe zur Speisung des Blockheizkraftwerks kann der Gesamtprozess als CO2 neutral bezeichnet werden

Ein Abkühlen des Kohleschlamms in einem Wärmetauscher entfällt, da dieser direkt mit der Reaktionstemperatur von über 200°C einer Sprühtrocknung zugeführt wird

Eine Druckentspannung des Kohleschlamms durch eine separate Vorrichtung wie Entspannungsbehälter oder Pumpen zur Entnahme aus dem Reaktionsvolumen entfällt, da dieser direkt mit dem Reaktionsdruck von über 14bar einer Sprühtrocknung zugeführt wird.

Eine Entwässerung des Kohleschlamms entfällt, da durch die schlagartige Entspannung des Kohleschlamm während der Sprühtrocknung und die schlagartige Wasserverdampfung durch das hohe Temperaturniveau große Anteile des Wassers aus dem Kohleschlamm in die Umgebungsluft abgegeben werden (4e)

Als vorteilhaft erweist sich die Erfindung insbesondere in folgenden Punkten:
- Der organische Anteil des HTC Abwassers wird in einem Behandlungsschritt gleichzeitig aufgeschlossen und die freigesetzten Schwermetalle und Nährstoffe wie bspw. Phosphor durch Bildung von schwer löslichen Salzen gefällt.
- Durch den Abbau des Anodenmaterials während der Elektrolyse wird ein zusätzliches, kostengünstiges Fällmittel während der Reaktion bereitgestellt, das das Absetzverhalten des Fällschlamms verbessert.
- Durch Überwachung der Leitfähigkeit kann die Reaktionszeit der Elektrolyse bzw. die Aufenthaltsdauer des Abwassers im Reaktionsvolumen durch Einstellen der Durchflussgeschwindigkeit so angepasst werden, dass ein minimaler elektrischer Energieverbrauch bezogen auf die behandelte Abwassermenge erzielt wird.
- Die Betriebskosten des Verfahrens werden lediglich durch den Verbrauch des Anodenmaterials und die elektrische Energie bestimmt. Es.sind keine weiteren Verbrauchsmittel notwendig.
- Durch die geeignete Auswahl des Anodenmaterials wird ein Fällprodukt hergestellt, aus dem sich das Phosphor leicht pflanzenverfügbar rückgewinnen lässt.
- Durch die Nutzung des HTC Abwassers zur Reinigung von Abgasen aus Anlagen zur thermischen Verwertung von HTC Kohle können Schadstoffe gezielt ins HTC Abwasser überführt und nachfolgend über die Abwasserbehandlung aus dem Prozess ausgeschleust werden, sodaß das gereinigte Abgas einer Verstromungseinrichtung, bspw. einem Gasmotor oder einer Turbine, zum Zweck eines zuverlässigen Betriebs zugeführt werden kann. (5e)

Vorteilhafte Weiterbildungen der Erfindung sind in den Unteransprüchen aufgeführt. Ausführungsbeispiele der Erfindung sind in den Zeichnungen dargestellt und werden im Folgenden näher beschrieben.

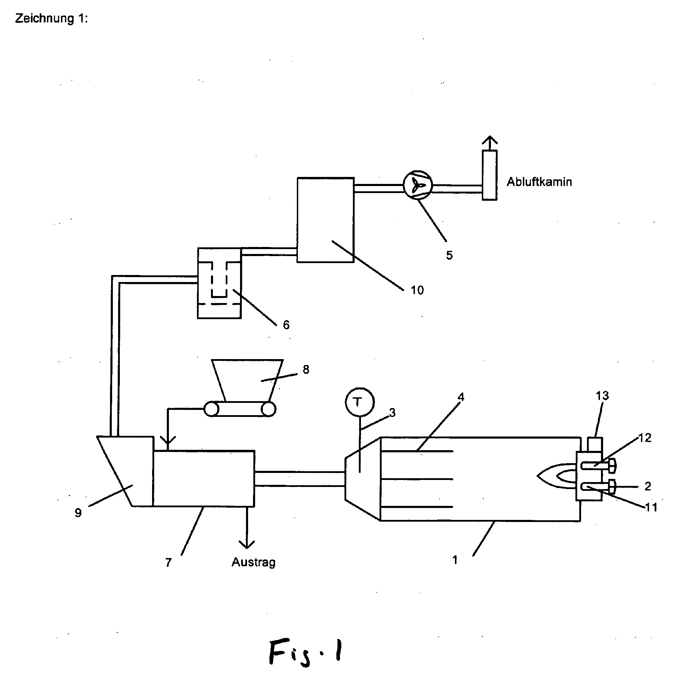

In einem ersten Ausführungsbeispiel lt. Fig. 1 wird Kohle, die durch hydrothermale Karbonisierung von Klärschlamm gewonnen wurde, thermisch in einer Asphaltmischanlage verwertet. Dazu wird die Kohle zunächst einer Brennkammer (1) zugeführt und dort mit Hilfe einer Stützfeuerung (2) verbrannt. Geeignete Messtechnik (3) überwacht relevante Parameter wie die Verbrennungstemperatur. Durch Einbauten (4) wird eine Gesamtlänge des effektiven Brennraums festgelegt, die mit der durch ein Gebläse (5) bestimmte Strömungsgeschwindigkeit des Brennstoffs eine Mindestaufenthaltsdauer in der Brennkammer sicherstellt.

Die heißen Brenngase werden der Asphalttrommel (7) zugeführt, in der das Asphaltgestein (8) erhitzt wird. Durch den Auslass (9), den Partikelfilter (6) und die nachfolgende Abluftbehandlung (10) verlässt die Abluft die Anlage.

Durch die Düse (11) wird ein alternativer Brennstoff, beispielsweise fossile Braunkohle, zum Anfeuern des Prozesses verwendet. Nach Erreichen der notwendigen Verbrennungsbedingungen wird über die Düse (12) die durch hydrothermale Karbonisierung hergestellte Kohle zugeführt. Beide Düsen (11) und (12) werden durch eine Regelung (13) entsprechend den Messwerten aus (3) angesteuert.

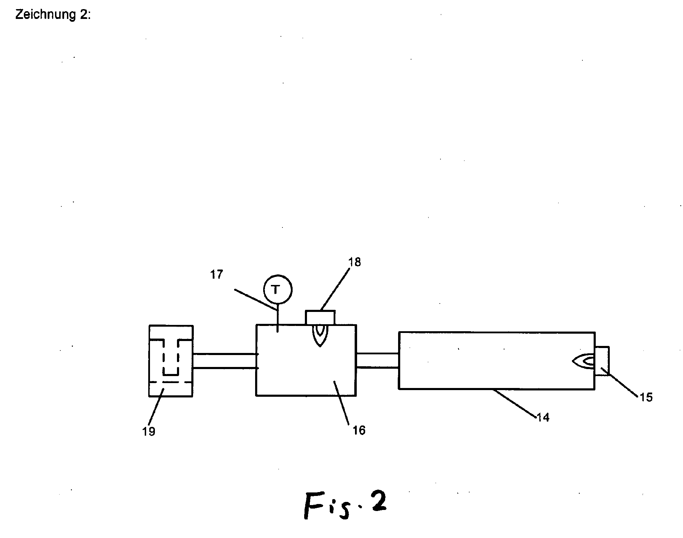

In einem zweiten Ausführungsbeispiel lt. Fig. 2 wird in einer Asphalttrommel (14) über eine Staubfeuerung (15) direkt Kohle verbrannt, die aus hydrothermaler Karbonisierung von Abfallstoffen hergestellt wurde. Der Abgasstrom verlässt die Asphalttrommel durch eine Nachbrennkammer (16), die in der Art gestaltet ist, dass die Bedingungen für eine sichere Behandlung der Schadstoffe sichergestellt sind. Diese Bedingungen werden durch geeignete Messtechnik (17) überwacht. Die Nachbrennkammer wird durch eine separate Feuerung (18) auf eine Mindesttemperatur erwärmt. Am Austritt der Nachbrennkammer befindet sich ein Partikelfilter (19).

### Zeichnungslegende der Fig. 1 und 2:

(1) Brennkammer
(2) Stützfeuerung
(3) Messtechnik
(4) Einbauten in Brennkammer
(5) Gebläse
(6) Partikelfilter
(7) Asphalttrommel
(8) Asphaltgestein
(9) Auslass aus Asphalttrommel
(10) Abluftbehandlung
(11) Düse zur Zuführung von alternativen Brennstoffen
(12) Düse zur Zuführung von Kohle aus hydrothermaler Karbonisierung von Klärschlamm
(13) Regelung
(14) Asphalttrommel mit Abgasnachverbrennung
(15) Brenner zur Staubfeuerung von Kohle
(16) Nachbrennkammer
(17) Messtechnik zur Überwachung der Verbrennungsbedingungen der Nachbrennkammer
(18) Befeuerung der Nachbrennkammer
(19) Partikelfilter (2f)

- Fig. 3:: Temperaturverlauf Erwärmung Reaktionsgemisch Klärschlamm + Gycerin
- Fig. 4:: Mittlerer Reaktionsdruck verschiedener Reaktionsgemische Klärschlamm + Glycerin
- Fig. 5:: Gesamtgewicht, Trockensubstanzgewicht und Wassergehalt der Reaktionsprodukte aus der Hydrothermalen Karbonisierung von Klärschlamm + Glycerin Gemischen
- Fig. 6:: Aschegehalt der Reaktionsprodukte aus der Hydrothermalen Karbonisierung von Klärschlamm + Glycerin Gemischen

### Erläuterungen:

Das Glyzerin verdankt seine Entdeckung dem Apotheker C. W. Scheele aus Koping in Schweden, der es bei der Herstellung von Bleipflaster aus Olivenöl und Bleiglätte synthetisierte. Er gab ihm den Namen "principium dulce oelorum", was mit "Ölsüß" übersetzt werden kann. Triglyzeride sind Ester des Glyzerins mit drei Fettsäuren und eine der häufigsten Quellen für technisch hergestelltes Glyzerin. Bei der Biodiesel- und Seifenherstellung aus Ölen und Fetten fällt Roh-Glyzerin als Nebenprodukt an und muss, um die Qualität von Reinglyzerin zu erreichen, anschließend destilliert und gebleicht werden. Der pH Wert des in der Produktion anfallenden Rohglycerins liegt dabei teilweise deutlich im sauren Bereich.

Das Glyzerin wird gemäß der IUPAC-Nomenklatur als 1,2,3-Propantriol bezeichnet und hat die chemische Summenformel C3H8O3.

### Der Reinstoff ist von süßlichem Geschmack, farblos, ungiftig und unter Normbedingungen eine ölige Flüssigkeit. Es ist in beliebigen Anteilen mit Wasser und Alkohol mischbar, dabei wenig löslich in Ether und unlöslich in Paraffinen, chlorierten Kohlenwasserstoffen und Aromaten.

Industriell findet Glyzerin Verwendung als Grundstoff für Lösemittel, Dynamit, Kunststoffe, Kosmetikprodukte und Weichmacher. Seine Herstellung kann über vielfältige Wege erfolgen. Es fällt zum einen als Nebenprodukt diverser Verfahren an, kann jedoch auch durch Oxidation von Propen an einem Kupferkatalysator über mehrere Zwischenprodukte hergestellt werden.
Die Strukturformel von Glyzerin ist wie folgt:

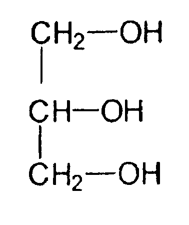

Die Strukturformel von Triglyzeride ist wie folgt:

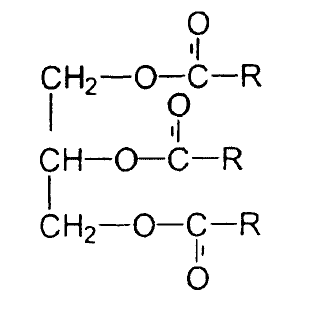

Unter Biodiesel versteht man üblicherweise Fettsäuremethylester (FAME), in Deutschland meist in Form von Rapsmethylester (RME). Dieser kann sowohl rein, als auch als Beimischung, zu herkömmlichem Dieselkraftstoff, in Dieselmotoren verwendet werden. Biodiesel gilt nicht als CO2-neutral. Bei seiner Herstellung wird in den Produktionsanlagen u. a. Methanol fossilen Ursprungs eingesetzt. Durch Nutzung der bei der Biodieselherstellung anfallenden Nebenprodukte Glyzerin und Rapsschrot kann diese positive CO2-Bilanz jedoch erheblich reduziert werden.

Die Einheit der Wärmeleitfähigkeit λ ist (W)/(K m) oder (J)/(s m K). Die Größe beschreibt wie viel Wärme pro Sekunde über eine Strecke m bei einer Temperaturdifferenz von x K übertragen wird. Der Wärmeleitfähigkeitswert liegt bei Glyzerin mit 2,73 W/m K deutlich über dem Wert von Wasser mit 0,57 W/m K.

Die Versuchsergebnisse wurden mit folgendem Aufbau gewonnen:

1000 g gepresster Klärschlamm wurde mit 7,2 g Schwefelsäure (80 %) und mit definierten Mengen Glyzerin vermengt. Das Glyzerin wurde in Mengen zudosiert, die 0 m% (Masseprozent), 5 m%, 10 m%, 15 m% und 20 m% der zu karbonisierenden Trockenmasse des Klärschlamms des Ansatzes ohne Wasser entsprechen. Das Gemisch wurde bei 200°C über 4 Stunden unter Luftabschluss in einem 2 Liter Rührreaktor karbonisiert.

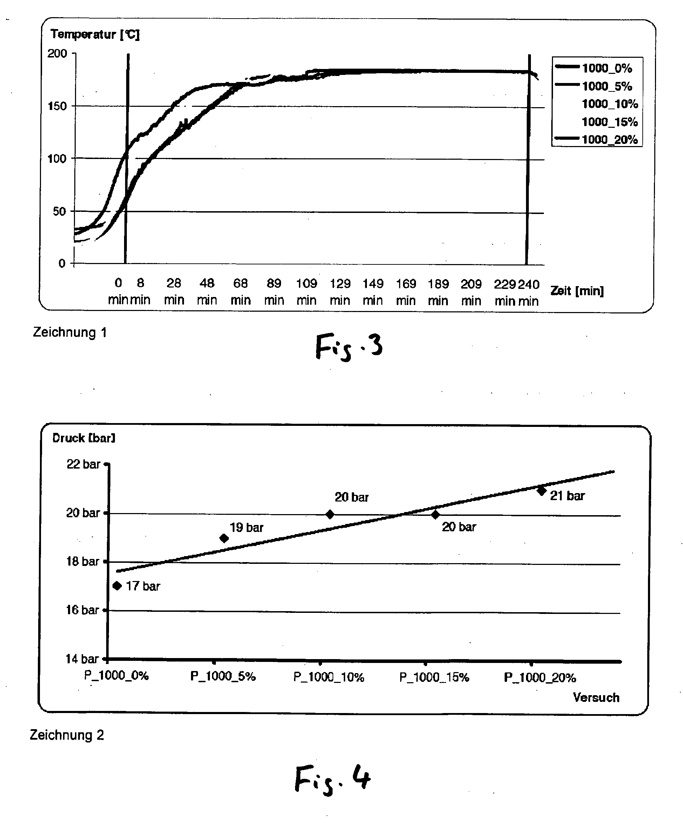

Der mit erhöhten Glyzeringehalten deutlich beschleunigte Anstieg der Gemischtemperatur im Inneren des Reaktors ist in Fig. 3 zu sehen:

In Fig. 4 ist erkennbar, dass sich die Beimischung von Glyzerin mit einer Erhöhung des Reaktionsdrucks auswirkt. Damit ist erkennbar, dass das Glyzerin an der Reaktion teilnimmt und die Exothermie der Hydrothermalen Karbonisierung unterstützt:

Weiterhin wurde die Viskosität des gepressten Klärschlamms durch die Zugabe von bereits 10% Glyzerin deutlich reduziert und die Rührbarkeit und Pumpbarkeit deutlich verbessert.

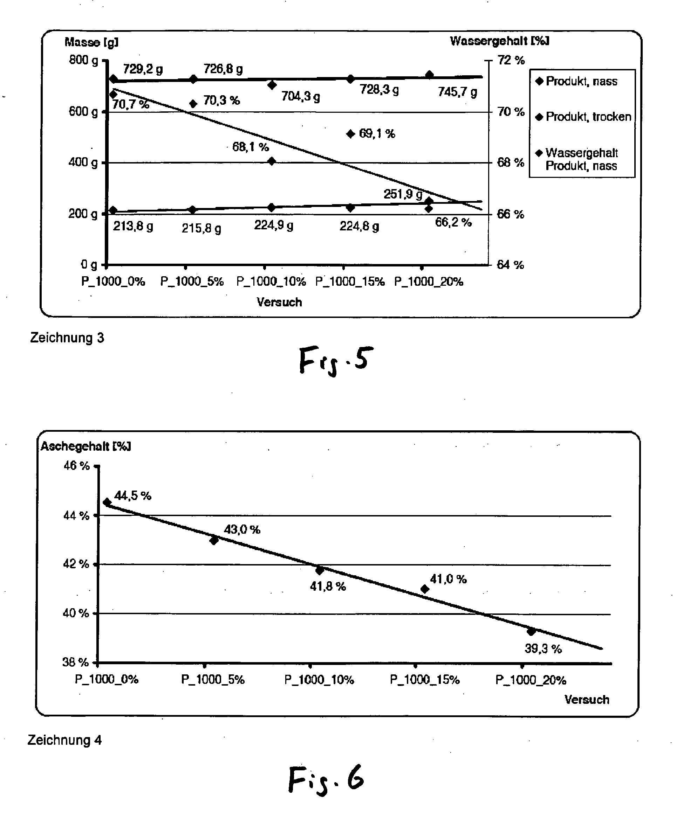

Durch die Zugabe von Glyzerin erhöht sich zudem noch der Feststoffgehalt des Produkts, was eine verbesserte Ausbeute der Hydrothermalen Karbonisierung bei der Gewinnung eines Festbrennstoffs bedeutet. So sinkt der Wassergehalt des Reaktionsgemischs von über 70% ohne Glyzerin auf 66% mit einer 20%-Glyzerin Zumischung. Fig. 5 zeigt über die unterschiedlichen Glyzerinkonzentrationen das annähernd konstante Gesamtgewicht des Produkts (ca. 730g), den ansteigenden Feststoffanteil von 213 g auf 251 g, und die rechnerische Abnahme des Wassergehalts.

In einem weiteren Versuch lt. Fig. 6 wurde der Aschegehalt des Reaktionsgemischs untersucht. Da Klärschlamm einen hohen Aschegehalt bis 50% Trockensubstanzanteil enthält, bewirkt die Beimischung von Glyzerin eine deutliche Reduktion: (3f)

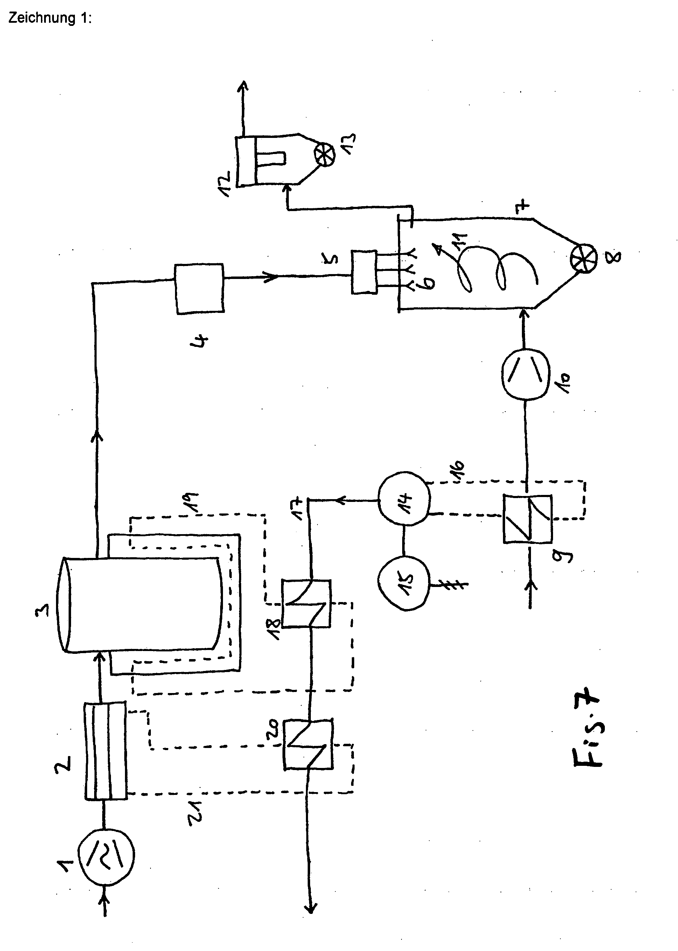

Fig. 7 zeigt eine weitere Ausführung:
Durch eine Extenderschneckenpumpe 1 wird Biomasse in einen Rohrbündelwärmetauscher 2 gefördert. Nach einer Erwärmung wird die Biomasse kontinuierlich in den HTC Reaktor 3 eingebracht, wo diese innerhalb einer mittleren Aufenthaltsdauer von 4 Stunden zu einem Kohleschlamm bei 200°C und pH Werten von pH4 karbonisiert wird.

Das Reaktionsgemisch wird kontinuierlich aus dem HTC Reaktor abgezogen und unter dem Reaktionsdruck von über 14bar einer Druckregelung 4 zugeführt. Diese kann beispielsweise als rückwärts laufende Extenderschneckenpumpe ausgeführt sein. Nach der Druckregelung wird der Kohleschlamm der Sprühtrocknung zugeführt, die aus einer Steuereinheit 5 und mehreren Düsen 6 besteht. Die Steuereinheit kann Düsen ein- und ausschalten sowie den Materialdurchsatz durch Einstellung der wirksamen Öffnungen der Düsen steuern. Die Düsen sind einzeln entnehmbar und tauschbar. Die Sprühtrocknung ist im Deckenbereich eines Silos 7 installiert. Im Bodenbereich ist eine Austragsorgan 8 wie bspw. eine Zellenradschleuse zum Austrag der Kohle installiert. Luft wird durch einen Wärmetauscher 9 angesaugt und mit dem Gebläse 10 in das Silo eingeblasen, dass ein axial aufsteigender Luftstrom entsteht. Die feuchte Luft tritt im Deckenbereich aus dem Silo und wird durch ein Filter gereinigt und abgelassen. Ein Austragsorgan 13 entfernt Feststoffe und Kondensat.

Der Motor 14 treibt einen Generator 15 an. Der Kühlwasserstrom 16 erwärmt den Wärmetauscher 9 und die Trocknungsluft für das Silo. Die Abgase des Motors erwärmen über den Wärmetauscher 18 den Thermoölkreislauf 19 zur Heizung des HTC Reaktors 3 auf eine Temperatur von 200°C. Ein nachgeschalteter Wärmetauscher 20 erwärmt einen Thermoölkreislauf 21, der im Rohrwärmetauscher 2 die Biomasse vorerwärmt.

### Zeichnungslegende zu Fig. 7:

1: Extenderschneckenpumpe
2: Rohrwärmetauscher
3: HTC Reaktor
4: Druckregelung zur Einstellung des Kohleschlammdrucks
5: Steuereinheit für Düsen der Sprühtrocknung
6: Düsen der Sprühtrocknung
7: Silo
8: Austragsorgan für getrocknete Kohle
9: Wärmetauscher für Trocknungsluft
10: Gebläse
11: Axial aufsteigender Luftstrom
12: Luftfilter
13: Austragsorgan für Kondensat und Feststoffe
14: Motor
15: Generator
16: Kühlkreislauf des Motors
17: Abgasstrom des Motors
18: Wärmetauscher zur Erwärmung des HTC Reaktor Thermoöls
19: HTC Reaktor Thermoöl
20: Wärmetauscher zur Erwärmung des Rohrwärmetauscher Thermoöls
21: Rohrwärmetauscher Thermoöl (4f)

Bei der Elektrolyse erfolgt die Abscheidung von Metallen wie die Zersetzung von Wasser durch Elektronentransfer. Dabei erfolgen folgende Vorgänge an den Elektroden:
Kathode (negative Ladung):

   2 H⁺ + 2 e⁻ → H₂

   Me₁^{2+/3+} + 2e⁻/3e⁻→Me₁.
Anode (positive Ladung):

   4 HO⁻ → O₂+H₂O+4e⁻

   Me₂ → Me₂^{2+/3+}+ 2 e⁻/3e⁻

Aus den Gleichungen der Kathode lässt sich erkennen, dass die Abscheidung von Metallen der Elektronenanzahl proportional ist.
m = M |t η / (z F)
m = Masse abgeschiedene Stoffe (g)
M = Molare Masse dieses Stoffes (g / mol)

| = Stromstärke (A)
t = Zeit der Elektrolyse (s)
η=Stromausbeute (%)
z = Ladung des abgeschiedenen Ions
F = Faraday-Konstante ( 96.485 A s / mol)

Ob die Metalle durch die Kathodenreaktion abgeschieden werden oder aufgrund der Anodenreaktion in Lösung gehen hängt davon ab ob wie edel das Metall ist (siehe Standardpotentiale, je negativer das Metall ist umso unedler ist es, je positiver umso edeler). Aus den Standardpotentialen ergibt sich weiterhin die Reihenfolge der abgeschiedenen Metalle, zuerst werden die edlen Metalle abgeschieden und dann die unedleren. Weiterhin muss mindestens die Zersetzungsspannung aufgebracht werden. Diese kann aus den Standardpotentialen berechnet werden.
U = eedel - eunedel

Werden bei der Elektrolyse Gase freigesetzt so kommt es zur Bildung von Gasblasen auf den Elektroden. Damit diese Abschirmung der Elektroden die Elektrolyse nicht zum Erliegen bringt muss die Spannung erhöht werden. Diese wird als Überspannung bezeichnet und ist abhängig vom abgeschiedenen Gas, Elektrodenmaterial und der Stromdichte.

**Tabelle 1: Überspannungen von Wasserstoff und Sauerstoff (Mindestwerte bei geringen Stromdichten)**

| Wasserstoff | | Sauerstoff | |
|---|---|---|---|
| Elektrodenmaterial | Überspannung | Elektrodenmaterial | Überspannung |
| Platin (platiniert) | 0 | Nickel | 0,12 |
| Gold | -0,02 | Platin | 0,24 |
| Platin | -0,08 | Eisen | 0,24 |
| Nickel | -0,14 | Kupfer | 0,25 |
| Graphit | -0,14 | Platin | 0,44 |
| Eisen | -0,17 | Gold | 0,52 |
| Kupfer | -0,19 | | |
| Zink | -0,48 | | |
| Quecksilber | -0,57 | | |

Beim Auftreten einer Überspannung muss die Potentialdifferenz zwischen den Elektroden über die Zersetzungsspannung angehoben werden.

In den meisten Fällen ist die Überspannung nur ein Störeffekt, der minimiert wird. Bei einigen Prozessen wird die Überspannung aber gezielt ausgenutzt um unerwünschte Prozesse zu vermeiden, z.B.: Gewinnung von Chlorgas bei der wässrigen Elektrolyse von NaCl-Lösungen, ohne die Überspannung würde man anstelle von Chlorgas nur Sauerstoff erhalten.

### Anodenreaktion:

Durch die Reduktion der OH-lonen zu Wasser und Sauerstoff (über die Zwischenstufe des Singulett Sauerstoffes (atomarer Sauerstoff)) wird ein sehr starkes Oxidationsmittel bereitgestellt. Dieses ist in der Lage die Kohlenwasserstoffe / Huminstoffe zu oxidieren. Dabei entsteht CO2 und hydrophobere Kohlenwasserstoffe.

Gleichzeitig geht bspw. von einer Eisenanode ein Teil in Lösung (Fe-II), welcher auch innerhalb der Lösung andere Metalle reduziert (in die metallische Form bringen und dann als Partikel ausfällt). Dabei geht das Fe-(II) in das Fe-(III) über.

3 Fe²⁺ + Cr⁶⁺ → 3 Fe³⁺ + Cr³⁺

4 Fe²⁺ + O₂ + 2 H₂O → 4 Fe³⁺ + 4 OH-

In Abbildung 1 wird anhand des zeitlichen Verlaufs der Leitfähigkeit der Reinigungseffekt der Elektrolyse bei verschiedenen Elektrodenmaterialien und Elektrodenspannungen in einem 1,5 Liter Laborreaktor aufgezeigt.

Die folgende Tabelle zeigt den Abscheidegrad von Schwermetallen bei den o.g. Versuchen in Abhängigkeit von der Behandlungsdauer:

**Tabelle 2: Abscheidegrade von Cr und Zn in Abhängigkeit der Behandlungsdauer**

| Versuch | Zeit | ASG % Cr | ASG % Zn |
|---|---|---|---|
| 068-02 | 30 | 53 | 97 |
| 068-02 | 45 | 60 | 99 |
| 073-03 | 10 | 45 | 99 |
| 073-03 | 22 | 73 | 100 |

Da für die Wirtschaftlichkeit des Verfahrens vorrangig die elektrische Energie entscheidend ist, die zur Erzielung der erforderlichen Abscheidegrade notwendig ist, wird in der Graphik nach Abbildung 2 der Energieverbrauch verschiedener Elektrolysebedingungen in Abhängigkeit von der Reduktion der Leitfähigkeit gezeigt.

Durch die Möglichkeit, mit vergleichsweise geringem Aufwand Schadstoffe aus dem Abwasser zu entfernen, kann das HTC Abwasser vor der Behandlung auch vorteilhaft mit Schadstoffen angereichert werden. Höchst vorteilhaft ist es, Abgas aus Vergasungs-, Pyrolyse- oder Verbrennungsprozessen durch eine geeignete Wäsche mit dem HTC Abwasser von Schadstoffen zu befreien. So bildet die Vergasung von HTC Kohle durch die mineralischen Anteile beispielsweise Siloxane, die sich als mineralischer Belag auswirken können und damit die Zuverlässigkeit einer Verstromung beispielsweise in einem Gasmotor beeinträchtigt. Ebenso bilden Teere Ablagerungen, die regelmäßig mit hohem Aufwand zu reinigen sind. Chlorverbindungen führen zu frühzeitiger Korrosion und zu verringerter Lebensdauer von nachfolgenden Aggregaten, bspw. zur Verstromung. Schwermetalle sind aus dem Abgasstrom zu entfernen, um vorgegebene Grenzwerten einzuhalten.

Zur Reinigung von Gasen eignet sich das Abwasser aus dem HTC Prozess insbesondere gut, da es über eine hohe Konzentration fein verteilter Nanokohle verfügt. Es besitzt in Folge dessen eine hohe Adsorptionsfähigkeit, die sich vorteilhaft auswirkt. So gelingt es, einen Großteil der im Abgasstrom enthaltenen Schadstoffe durch Kontakt mit dem HTC Abwasser zu entfernen und beispielsweise das gereinigte Pyrolysegas zum zuverlässigen Antrieb eines Gasmotors zu verwenden.

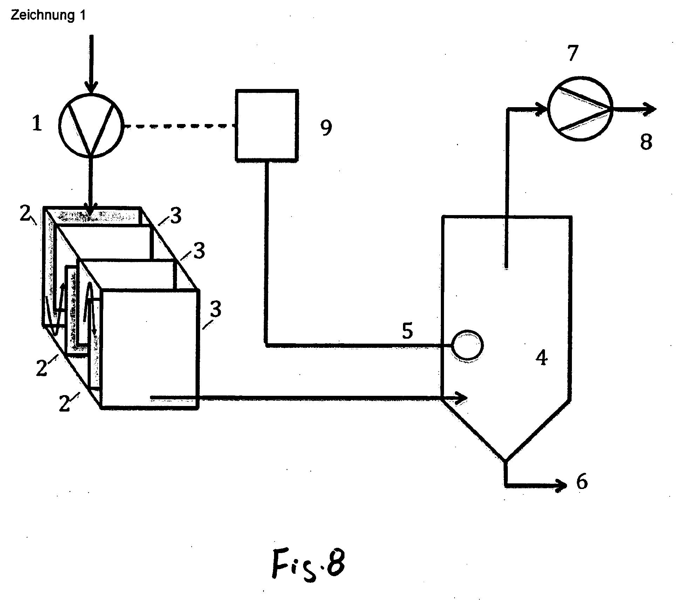

Vorteilhafte beispielhafte Ausführungen des erfindungsgemäßen Verfahrens werden im Folgenden beschrieben. Hierbei zeigt Fig. 8 eine Ausführung der Abwasserbehandlung in einfacher schematischer Darstellung:

Durch ein einstellbares Ventil (1) oder eine einstellbare Pumpe wird das HTC Abwasser dem Einlass einer Durchflussarmatur zugeführt, die aus einer Reihe nacheinander angebrachter Anoden (2) und Kathoden (3) besteht. Die Kathoden sind mit dem negativen Pol und die Anoden mit dem positiven Pol einer Gleichspannungsquelle verbunden. Durch die Anordnung der Anoden und Kathoden durchfließt das Abwasser mäanderförmig die Armatur, wodurch sich durch die Geschwindigkeit und die Wegstrecke die Aufenthaltsdauer definiert. Die Anoden sind so in der Armatur befestigt, dass sie sich leicht tauschen lassen. Alternativ kann das Anodenmaterial, das dem Abbau während des Verfahrens unterliegt, auch in anderen Formen, z.B. in Kugelform, eingebracht werden. Am Auslass der Armatur wird das Abwasser entnommen und einem Absetzbehälter (4) zugeführt. Eine Leitfähigkeitsmessung (5) ist im Bereich der klaren Phase des behandelten Abwassers installiert. Der Fällschlamm setzt sich nach unten hin ab und kann über den Auslass (6) entnommen werden. Dies kann automatisiert geschehen, indem beispielsweise die Trübung der entnommenen Flüssigkeit überwacht wird und beim Phasenwechsel Fällschlamm/klarer Überstand ein nachgeschaltetes Ventil entsprechend geschaltet wird und die Phasen trennt. Über ein Ventil (7) und den Auslass (8) kann Schaum und die entstehende Gasphase sicher abgelassen werden. Eine Regeleinheit (9) misst die Leitfähigkeit des behandelten Abwassers und stellt entsprechend dem notwendigen Abscheidegrad die Durchflussgeschwindigkeit über das Einlassventil (1) ein. Optional kann der Fällschlamm einer nachgeschalteten Filtration zugeführt werden.

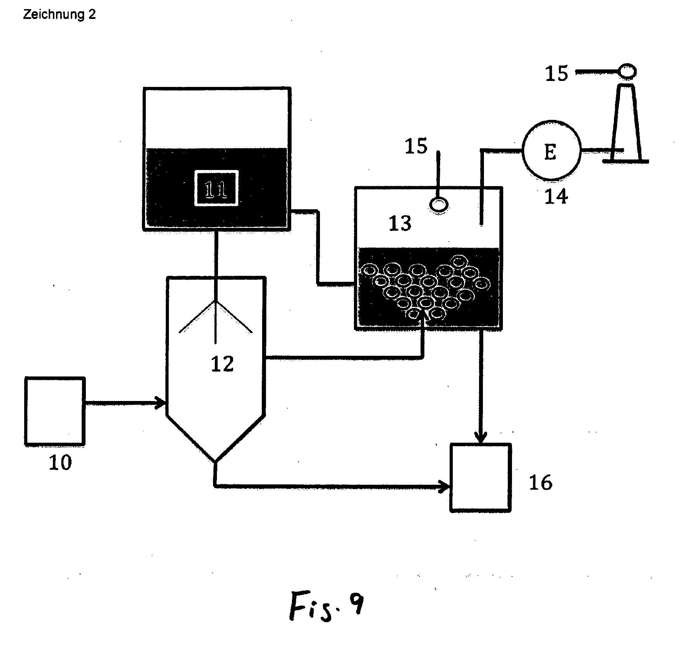

Fig. 9 zeigt eine Ausführung der Abgasbehandlung aus einer Vorrichtung zur thermischen Verwertung von HTC Kohle mit anschließender Abwasserbehandlung in einfacher schematischer Darstellung:

Das Abgas aus dem Pyrolyseofen (10), in dem HTC Kohle unter Sauerstoffabschluss und bei Temperaturen zwischen 500°C und 900°C behandelt wird, wird mit HTC Abwasser (11) in einer Quenche (12) abgekühlt und anschließende in einem geschlossenen, mit HTC Abwasser gefüllten Behälter (13) in feinen Blasen eingebracht. Der Behälter dient zusätzlich als Gasspeicher. Das Gas wird dem Behälter entnommen und zur anschließenden Verstromung einem Gasmotor (14) zugeführt. Einrichtungen zur Überwachung von Grenzwerten (15) befinden sich im Gasspeicher und am Abgasausgang des Motors. Das mit den Schadstoffen aus dem Abgas angereicherte Abwasser aus der Quenche (12) und aus dem Behälter (13) wird einer erfindungsgemäßen Abwasserbehandlung (16) zugeführt. (5f)

### Kurzfassungen der vorteilhaftesten Ausführungen:

Verfahren zur thermischen Verwertung von festen Brennstoffen, insbesondere Kohlestaub, die durch hydrothermale Karbonisierung von Biomasse hergestellt wurden, wobei die Brennstoffe in einer Brennkammer oder einem Wirbelschichtofen verbrannt werden. (2a)

Verfahren, wobei durch die mechanische Auslegung der Brennkammer oder des Wirbelschichtofens oder die Betriebsbedingungen eine minimale Aufenthaltsdauer der durchströmenden Partikel des Brennstoffs von 2 sec sichergestellt werden kann. (2b)

Verfahren, wobei durch Messung der Verbrennungsbedingungen, insbesondere der Temperatur, eine sichere Behandlung des Brennstoffs sichergestellt und nachgewiesen werden kann. (2c)

Verfahren zur thermischen Verwertung von festen Brennstoffen, insbesondere Kohlestaub, die durch hydrothermale Karbonisierung von Biomasse hergestellt wurden, wobei ein alternativer Brennstoff verwendet wird, bis Verbrennungsbedingungen, insbesondere die Verbrennungstemperatur, in einer Brennkammer oder in einem Wirbelschichtofen erreicht sind, die eine sichere Behandlung des Brennstoffs ermöglichen. (2d)

Verfahren, wobei der Brennprozess bei Unterschreiten von Mindestanforderungen an die Verbrennungsbedingungen entweder abgebrochen wird oder auf einen alternativen Brennstoff umgeschaltet wird. (2e)

Verfahren zur thermischen Verwertung von festen Brennstoffen, insbesondere Kohlestaub, die durch hydrothermale Karbonisierung von Biomasse hergestellt wurden wobei der Abgasstrom in einer Brennkammer nachbehandelt wird, in der Art, dass eine sichere Behandlung der im Abgasstrom enthaltenen Schadstoffe gewährleistet ist, insbesondere durch eine Mindesttemperatur oder eine Mindestaufenthaltsdauer. (2f)

Verfahren, wobei ein Austreten von Partikeln aus der Brennkammer oder den Wirbelschichtofen durch nachgeschaltete Partikelfilter oder ähnliche Vorrichtungen, die zum Zurückhalten von Partikeln geeignet sind, vermieden wird. (2g)

Verfahren, wobei die Wärmeenergie des Brenngases direkt durch Kontakt mit dem zu erwärmenden Material oder indirekt über Wärmetauschersysteme, genutzt wird. (2h)

Additiv zur Hydrothermalen Karbonisierung von Biomasse, wobei es 3 bis 100 Gew.-% Glyzerin, Propantriol, Triglyzeride, Rohglyzerin, die Derivate der vorgenannten Stoffe oder eine Mischung aus den vorgenannten Stoffen, bezogen auf das Gesamtadditiv, enthält. (3a)

Additiv, wobei das Additiv in Mengen von 1 bis 99%, besonders bevorzugt 5 bis 80%, besonders bevorzugt 10 bis 60% der Biomasse beigemischt wird. (3b)

Additiv, wobei es eine wärmeleitfähigkeitsverbessernde Wirkung auf die Biomasse entfaltet. (3c)

Verwendung eines Additivs nach einem der vorgenannten Verfahren zur Hydrothermalen Karbonisierung von Biomasse, insbesondere Klärschlamm. (3d)

Verfahren zur Hydrothermalen Karbonisierung von Biomasse, wobei die notwendige Wärmeenergie von einem Blockheizkraftwerk bereitgestellt wird. (4a)

Verfahren, wobei die notwendige Wärmeenergie entweder aus dem Abgasstrom oder dem Kühlkreislauf oder beidem des Blockheizkraftwerks bereitgestellt wird. (4b)

Verfahren, wobei die Abwärme des Abgasstroms zur Erwärmung des Reaktors zur Hydrothermalen Karbonisierung der Biomasse genutzt wird. (4c)

Verfahren, wobei die Abwärme des Kühlkreislaufs zur Erwärmung der Biomasse vor dem Eintritt in den Reaktor oder zur Trocknung des Endprodukts genutzt wird. (4d)

Verfahren zur Hydrothermalen Karbonisierung von Biomasse, wobei die Trocknung des Endprodukts durch Sprühtrocknung erfolgt. (4e)

Verfahren, wobei das Endprodukt aus dem druckbeaufschlagten Reaktionsvolumen mit oder ohne Vorrichtung zur Einstellung des Sprühdrucks der Sprühvorrichtung zugeführt wird. (4f)

Verfahren, wobei die Einstellung des Sprühdrucks durch eine Extenderschneckenpumpe erfolgt. (4g)

Verfahren, wobei die Temperatur des Produkts vor Eintritt in die Sprühvorrichtung größer 60°C ist. (4h)

Verfahren, wobei die Sprühvorrichtung über eine Vorrichtung verfügt, mit der die wirksame Öffnung einstellbar ist. (4i)

Verfahren, wobei die Sprühvorrichtung aus einer oder mehreren Düsen besteht, die jeweils ein- und ausschaltbar sind. (4j)

Verfahren zur Reinigung von Abwasser aus Hydrothermaler Karbonisierung von Biomasse, wobei das Abwasser einer Elektrolyse unterzogen wird. (5a)

Verfahren, wobei eine effektive Elektrodenspannung von > 2 V und/oder eine effektive Stromdichte im zwischen zwei Elektroden befindlichen Abwasser von > 55 A/m² besteht. (5b)

Verfahren, wobei an die Elektroden eine Gleich- oder Wechselspannung angelegt wird. (5c)

Verfahren, wobei die Elektroden aus Eisen und/oder Aluminium und/oder Kupfer und/oder Graphit gefertigt sind. (5d)

Verfahren, wobei das Fällprodukt einem anschließenden Verfahren zur Rückgewinnung von Phosphor zugeführt wird. (5e)

Verfahren, wobei die Leitfähigkeit des Überstands nach Absetzen oder Flotieren des Fällprodukts als Messgröße erfasst wird um damit ein Maß für den Abscheidegrad der Inhaltsstoffe zu erlangen und/oder die für die Elektrolyse notwendige elektrische Energie pro Abwasservolumen einzustellen. (5f)

Verfahren zur Verwendung von Abwasser aus Hydrothermaler Karbonisierung von Biomasse, wobei Abgas aus einer Vorrichtung zur thermischen Verwertung von Biomasse, insbesondere von Brennstoff aus der Hydrothermalen Karbonisierung von Biomasse, mit dem Abwasser aus Hydrothermaler Karbonisierung von Biomasse in Kontakt gebracht wird, insbesondere durch Besprühen oder Einblasen oder Einperlen oder Gaswäsche. (5g)

Verfahren, wobei die angereicherten Schadstoffe in einem anschließenden Verfahrensschritt abgetrennt werden, insbesondere durch Elektrolyse oder durch Elektrokoagulation. (5h)

## Patentansprüche

1. Verfahren zur thermischen Verwertung von festen Brennstoffen, insbesondere Kohlestaub, die durch hydrothermale Karbonisierung von Biomasse hergestellt wurden **dadurch gekennzeichnet, dass** durch die mechanische Auslegung der Brennkammer oder des Wirbelschichtofens oder die Betriebsbedingungen eine minimale Aufenthaltsdauer der durchströmenden Partikel des Brennstoffs von 2 sec sichergestellt werden kann.

2. Verfahren nach Anspruch 1,**dadurch gekennzeichnet, dass** durch Messung der Verbrennungsbedingungen, insbesondere der Temperatur, eine sichere Behandlung des Brennstoffs sichergestellt und nachgewiesen werden kann, und dass ein alternativer Brennstoff verwendet wird, bis Verbrennungsbedingungen, insbesondere die Verbrennungstemperatur, in einer Brennkammer oder in einem Wirbelschichtofen erreicht sind, die eine sichere Behandlung des Brennstoffs ermöglichen.

3. Verfahren zur thermischen Verwertung von festen Brennstoffen, insbesondere Kohlestaub, die durch hydrothermale Karbonisierung von Biomasse hergestellt wurden **dadurch gekennzeichnet, dass** der Abgasstrom in einer Brennkammer nachbehandelt wird, in der Art, dass eine sichere Behandlung der im Abgasstrom enthaltenen Schadstoffe gewährleistet ist, insbesondere durch eine Mindesttemperatur oder eine Mindestaufenthaltsdauer.

4. Verfahren zur Hydrothermalen Karbonisierung von Biomasse, **dadurch gekennzeichnet, dass** die notwendige Wärmeenergie entweder aus dem Abgasstrom oder dem Kühlkreislauf oder beidem einer Verbrennung oder eines Blockheizkraftwerks bereitgestellt wird.

5. Verfahren nach Anspruch 4, **dadurch gekennzeichnet**, das die Abwärme des Abgasstroms zur Erwärmung des Reaktors zur Hydrothermalen Karbonisierung der Biomasse genutzt wird.

6. Verfahren zur Hydrothermalen Karbonisierung von Biomasse, **dadurch gekennzeichnet, dass** die Trocknung des Endprodukts durch Sprühtrocknung erfolgt.

7. Verfahren nach Anspruch 6, **dadurch gekennzeichnet, dass** das Endprodukt aus dem druckbeaufschlagten Reaktionsvolumen mit oder ohne Vorrichtung zur Einstellung des Sprühdrucks der Sprühvorrichtung zugeführt wird.

8. Verfahren nach Anspruch 6, **dadurch gekennzeichnet, dass** die Einstellung des Sprühdrucks durch eine Extenderschneckenpumpe erfolgt.

9. Verfahren nach Anspruch 6, **dadurch gekennzeichnet, dass** die Sprühvorrichtung über eine Vorrichtung verfügt, mit der die wirksame Öffnung einstellbar ist, und/oder dass die Sprühvorrichtung aus einer oder mehreren Düsen besteht, die jeweils ein- und ausschaltbar sind.

10. Additiv zur Hydrothermalen Karbonisierung von Biomasse, **dadurch gekennzeichnet, dass** es 3 bis 100 Gew.-% Glyzerin, Propantriol, Triglyzeride, Rohglyzerin, die Derivate der vorgenannten Stoffe oder eine Mischung aus den vorgenannten Stoffen, bezogen auf das Gesamtadditiv, enthält.

11. Additiv nach Anspruch 10, **dadurch gekennzeichnet, dass** das Additiv in Mengen von 1 bis 99%, besonders bevorzugt 5 bis 80%, besonders bevorzugt 10 bis 60% der Biomasse beigemischt wird.

12. Verwendung eines Additivs nach einem der Ansprüche 10 und 11 zur Hydrothermalen Karbonisierung von Biomasse, insbesondere Klärschlamm.

13. Verfahren zur Reinigung von Abwasser aus Hydrothermaler Karbonisierung von Biomasse, **dadurch gekennzeichnet, dass** das Abwasser einer Elektrolyse unterzogen wird.

14. Verfahren nach Anspruch 13, **dadurch gekennzeichnet, dass** eine effektive Elektrodenspannung von > 2 V und/oder eine effektive Stromdichte im zwischen zwei Elektroden befindlichen Abwasser von > 55 A/m² besteht.

15. Verfahren nach Anspruch 13 oder 14, **dadurch gekennzeichnet, dass** an die Elektroden eine Gleich- oder Wechselspannung angelegt wird.

16. Verfahren nach vorgenannten Ansprüchen 13 bis 15, **dadurch gekennzeichnet, dass** die Elektroden aus Eisen und/oder Aluminium und/oder Kupfer und/oder Graphit gefertigt sind.

17. Verfahren nach Anspruch 13, **dadurch gekennzeichnet, dass** das Fällprodukt einem anschließenden Verfahren zur Rückgewinnung von Phosphor zugeführt wird

18. Verfahren nach Anspruch 13, **dadurch gekennzeichnet, dass** die Leitfähigkeit des Überstands nach Absetzen oder Flotieren des Fällprodukts als Messgröße erfasst wird um damit ein Maß für den Abscheidegrad der Inhaltsstoffe zu erlangen und/oder die für die Elektrolyse notwendige elektrische Energie pro Abwasservolumen einzustellen.

19. Verfahren zur Verwendung des flüssigen Kohleschlamms oder von Abwasser aus Hydrothermaler Karbonisierung von Biomasse, **dadurch gekennzeichnet, dass** Abgas aus einer Vorrichtung zur thermischen Verwertung von Biomasse, insbesondere von Brennstoff aus der Hydrothermalen Karbonisierung von Biomasse, mit dem flüssigen Kohleschlamm oder dem Abwasser aus Hydrothermaler Karbonisierung von Biomasse in Kontakt gebracht wird, insbesondere durch Besprühen oder Einblasen oder Einperlen oder Gaswäsche.

20. Verfahren nach Anspruch 19, **dadurch gekennzeichnet, dass** die im Kontaktmedium angereicherten Schadstoffe in einem anschließenden Verfahrensschritt abgetrennt werden, insbesondere durch Elektrolyse oder durch Elektrokoagulation.
